(19) Europäisches Patentamt
European Patent Office
Office européen des brevets

(11) **EP 4 528 288 A2**

(12) **EUROPÄISCHE PATENTANMELDUNG**

(43) Veröffentlichungstag:
26.03.2025   Patentblatt 2025/13

(21) Anmeldenummer: 25153161.2

(22) Anmeldetag: **17.06.2021**

(51) Internationale Patentklassifikation (IPC):
*G01P 3/68* *(2006.01)*

(52) Gemeinsame Patentklassifikation (CPC):
**G01P 3/50; G01P 3/66; G01P 3/68**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **26.06.2020   DE 102020004099**

(62) Dokumentnummer(n) der früheren Anmeldung(en) nach Art. 76 EPÜ:
**21000159.0 / 3 929 593**

(71) Anmelder: **Podolski, Kevin**
**10247 Berlin (DE)**

(72) Erfinder: **Podolski, Kevin**
**10247 Berlin (DE)**

Bemerkungen:
Diese Anmeldung ist am 21.01.2025 als Teilanmeldung zu der unter INID-Code 62 erwähnten Anmeldung eingereicht worden.

(54) **MESSVERFAHREN ZUR BESTIMMUNG DER MINDESTGESCHWINDIGKEIT VON FAHRZEUGEN, DIE SICH MEHRDIMENSIONAL BEWEGEN  (VEREINFACHTES VEKTORMESSVERFAHREN)**

(57)    Messverfahren zur objektexternen Messung der Mindestgeschwindigkeit von Fahrzeugen, die sich gleichzeitig in mehrere Raumrichtungen, also mehrdimensional, bewegen, wobei die spezifische Messung nach dem Prinzip der vektoriellen Überlagerung erfolgt, erfindungsgemäß jedoch auf die Erhebung einer einzelnen Geschwindigkeitskomponente reduziert ist. Dadurch kann die Mindestgeschwindigkeit eines Fahrzeugs auch beim Durchfahren einer Kurve oder bei einem Abbiegevorgang an einer Kreuzung/ Einmündung bemessen werden.

EP 4 528 288 A2

# EP 4 528 288 A2

**Beschreibung**

<u>Technisches Gebiet</u>

Diese Patentanmeldung ist eine Teilanmeldung zur europäischen Stammanmeldung, Veröffentlichung: EP3929593, Anmeldung-Nr.: 21000159.0. Patentanspruch 1 dieser Teilanmeldung basiert auf Patentanspruch 1 dieser europäischen Stammanmeldung.

Die vorliegende Erfindung betriff das Verfahren zur Messung der Geschwindigkeit von Fahrzeugen, welche sich auf einer mehrdimensionalen Trajektorie bewegen. Nach anschließender, analytischer Anwendung der Gesetzmäßigkeiten der Vektorrechnung auf den derart gemessenen Geschwindigkeitswert erhält man die Mindestgeschwindigkeit des bemessenen Fahrzeugs, mithin die Geschwindigkeit, die das Fahrzeug im Rahmen des Messvorgangs mindestens aufwies.

<u>Stand der Technik</u>

Geschwindigkeitsmesssysteme und Geschwindigkeitsmessverfahren messen, zum Beispiel, unter Anwendung der Lasertechnik oder von Lichtschranken, nach dem Prinzip der Weg-Zeit-Messung, die Zeit, die für das Passieren einer ebenen Referenzstrecke benötigt wird und errechnen auf dieser Basis die momentane Geschwindigkeit des Objektes. Beispiele dazu sind exemplarisch unter den Veröffentlichungsnummern DE102008019818A1, DE102005028264B4, DE000003913526A1, EP000000042546A1, EP000000397984A2 bekannt. Weitere Anwendungen messen mittels Radarstrahlen, nach dem Dopplerprinzip, die Frequenz von zuvor ausgesendeten und von dem Objekt reflektierten Signalen und bestimmen auf diese Weise die momentane Geschwindigkeit von Objekten. Ein Beispiel dazu ist exemplarisch unter der Veröffentlichungsnummer DE000001239128B bekannt. Darüber hinaus sind weitere, darauf basierende Verfahren bekannt, die Störungen der Messergebnisse detektieren und auf diese Weise falschen Messergebnissen vorbeugen. Ein Beispiel dazu ist exemplarisch unter der Veröffentlichungsnummer WO001994004930A1 bekannt.

Alle Anwendungen messen und bestimmen dabei die Geschwindigkeit von Messobjekten, die sich in eine Richtung, also eindimensional, bewegen. Im Falle der Lichtschrankentechnik, da die Berechnung der Geschwindigkeit auf dem Abstand zueinander paralleler Lichtschranken beruht. Im Falle der Lasertechnik, da die Bestimmung der Geschwindigkeit auf dem Weg beruht, der von dem Messobjekt, zwischen zwei Signalen, auf einer zu dem Messgerät ebenen Fahrlinie zurückgelegt wird. Und im Falle der Radarmessung, da die Bestimmung der Geschwindigkeit auf der Änderung von Frequenzen, in Abhängigkeit von der Entfernung des Messobjektes, beruht.

Abweichungen zwischen der Messachse des Messsystems und der tatsächlichen, eindimensionalen Fahrlinie des angemessenen Fahrzeugs, das in dieser Anmeldung alle Fortbewegungsmittel, unabhängig davon, ob sich diese mit eigener Kraft bewegen oder auf andere Weise fortbewegt werden, umfasst, sind im Zusammenhang mit den genannten Messverfahren, auf Basis triangulärer Zusammenhänge im Allgemeinen als Winkel- oder Cosinusfehler bekannt.

Darüber hinaus ist dem Fachmann die Anfälligkeit dieser eindimensionalen, auf triangulären Zusammenhängen basierenden Messmethoden bei der Bemessung von linearen Schrägfahrten des bemessenen Fahrzeugs bekannt, wobei Messabweichungen auch zu Ungunsten des Betroffenen möglich sind. Auf dieser Grundlage erfolgt die Anwendung entsprechender Messmethoden bei Notwendigkeit einer rechtssicheren, präzisen Messung nach dem aktuellen Stand der Technik ausschließlich auf linearen Fahrbahnabschnitten oder im Bereich von Fahrbahnkurven mit Kurvenradien von mindestens 100 Metern. In diesen Messszenarien bewegt sich die Abweichung zwischen dem so ermittelten Messwert und der absoluten Geschwindigkeit des bemessenen Fahrzeugs innerhalb einer definierten Fehlergrenze, beispielsweise die in der Bundesrepublik Deutschland gesetzlich vorgeschriebene Verkehrsfehlergrenze für Geschwindigkeitsmessgeräte entsprechend den Anforderungen des Mess- und Eichgesetztes (MessEG) und der Eichordnung (EO) gemäß § 33 MessEG i.V.m. Anlage 18 Abschnitt 3 Nr. 4.2.2 EO.

Die Stammanmeldung, Veröffentlichung: EP3929593, offenbart ein Messsystem und Messverfahren zur präzisen Bestimmung der mehrdimensionalen Geschwindigkeit von Fahrzeugen, welche sich auf einer mehrdimensionalen Trajektorie bewegen, das Vektormessverfahren.

Aus der Veröffentlichungsnummer DE102018118150A1 ist ein System zum Steuern einer Verkehrsführung an einer Kreuzung wenigstens zweier Verkehrswege bekannt, wobei das System einen ersten Radarsensor, der einen ersten Erfassungsbereich aufweist, zum Erfassen von Verkehrsteilnehmern auf dem ersten Verkehrsweg, einen zweiten Radarsensor, der einen zweiten Erfassungsbereich aufweist, zum Erfassen von Verkehrsteilnehmern auf dem zweiten Verkehrsweg, wobei sich der erste Erfassungsbereich und der zweite Erfassungsbereich in wenigstens einem Überlappungsbereich überlappen, und eine elektronische Datenverarbeitungseinrichtung aufweist, die eingerichtet ist, die Sensordaten des ersten Radarsensors und die Sensordaten des zweiten Radarsensors zu Kombinationssignalen zumindest teilweise zu kombinieren und die Verkehrsführung an der Kreuzung zumindest auch in Abhängigkeit der Kombinationssignale zu steuern.

Aufgabe

Geschwindigkeitsmessverfahren, die auf dem Prinzip der Vektorrechnung beruhen und eine objektexterne Messung von nur einer Geschwindigkeitskomponente bei der Bemessung einer beliebigen, mehrdimensionalen Fahrbewegung des Messobjektes in einem variablen Messbereich umfassen, welche folglich auch zur Bemessung von Trajektorien mit Kurvenradien von weniger als beispielsweise 100 Metern ausdrücklich geeignet sind, sind nach dem aktuellen Stand der Technik nicht bekannt.

Kerngedanke dieser Erfindung, des vereinfachten Vektormessverfahrens, besteht darin, die Mindestgeschwindigkeit des angemessenen Fahrzeugs nach den Grundsätzen des Vektormessverfahrens zu bestimmen, wobei sich das Fahrzeug bei der Bemessung auf einer mehrdimensionalen Trajektorie bewegt und die Messung unter Verwendung eines Lichtschranken-, Radar- oder Lasermesssystems, nach dem Prinzip der Weg-Zeit-Messung basiert. Der so erhaltene Messwert wird unter Berücksichtigung der Gesetzmäßigkeiten der Vektorrechnung, in Verbindung mit allgemeinen Erkenntnissen einer mathematischen Analyse als unterer Grenzwert, der nicht ermittelten mehrdimensionalen Geschwindigkeit des Fahrzeugs, interpretiert.

Den daraus resultierenden Nachteilen bei der Präzision des derart erhaltenen Messergebnisses stehen, aufgrund der im Vergleich zum Vektormessverfahren geringeren Anzahl verwendeter Messsensoren, wirtschaftliche Vorteile gegenüber.

Darstellung der Erfindung

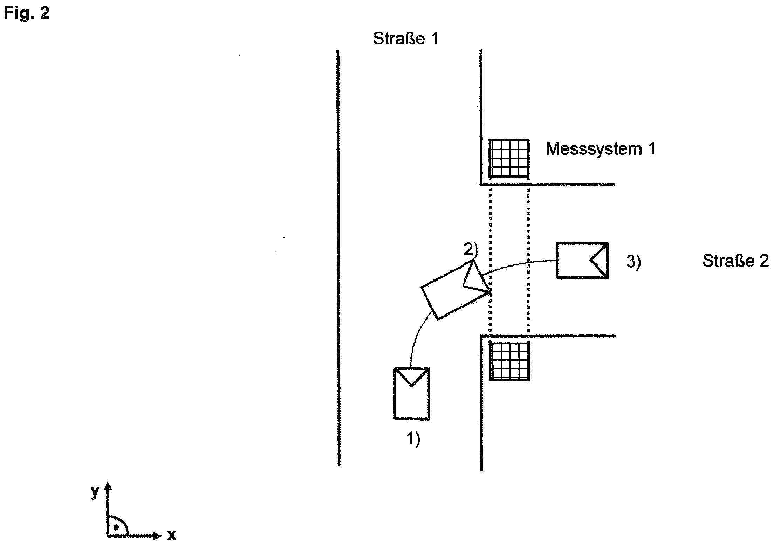

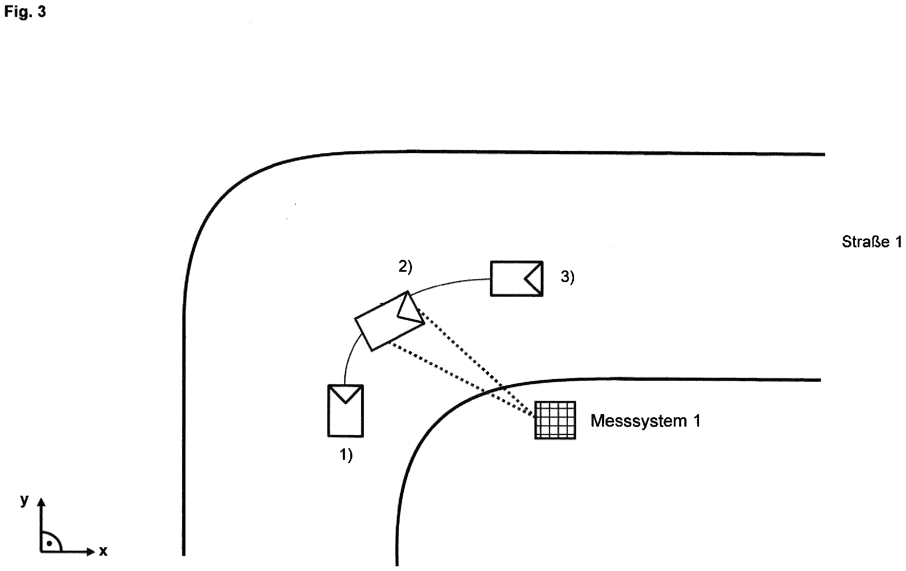

Diese Aufgabe wird erfindungsgemäß durch das vereinfachte Vektormessverfahren, wie folgt gelöst. Die Bestimmung der Mindestgeschwindigkeit eines sich zweidimensional in x-Richtung und y-Richtung bewegenden Fahrzeuges, wobei die x- und y-Richtung orthogonal zueinander angeordnet sind, erfolgt durch Messung nur einer Geschwindigkeitskomponente, von insgesamt zwei möglichen, mithilfe eines messenden Laser-, Radar- oder Lichtschrankenmesssystems nach dem Prinzip der Weg-Zeit-Messung, wobei das Messsystem derart ausgerichtet ist, dass sich das Fahrzeug bei der Bemessung auf seiner zweidimensionalen Fahrbahn vorwiegend in Richtung der Messachse und in Richtung des Messsystems bewegt. Siehe hierzu Fig. 2 und 3.

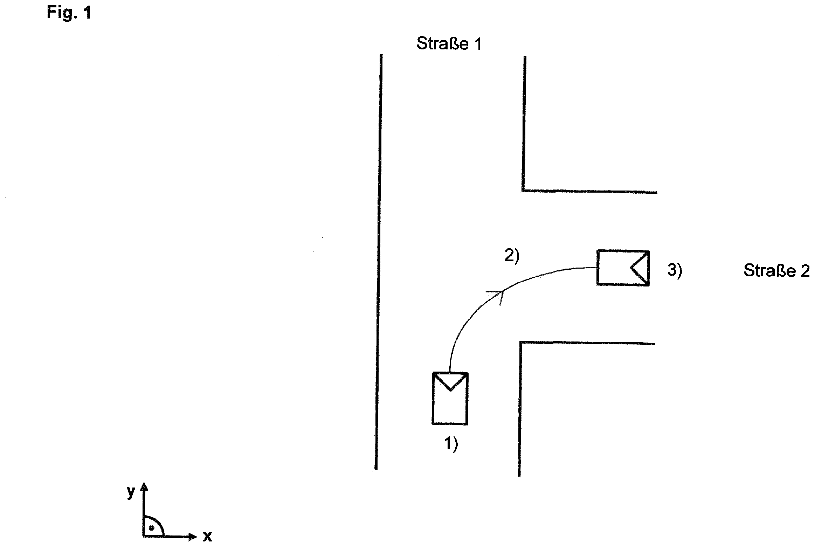

Die Fig. 1 zeigt beispielhaft mehrdimensionale Geschwindigkeitszustände eines Fahrzeugs beim Durchfahren einer Kurve. In Bezug auf die Geschwindigkeitskomponenten sind dabei im Wesentlichen drei aufeinanderfolgende Zustandsphasen zu unterscheiden. Für diese Zustandsphasen gilt:

$$\text{1) } \vec{v}\,(x,y) = (0;y) = \quad \text{reine Längsbeschleunigung in y-Richtung}$$

$$\text{2) } \vec{v}\,(x,y) = (x;y) = \quad \text{Längsbeschleunigung in y-, Querbeschleunigung in x-Richtung}$$

$$\text{3) } \vec{v}\,(x,y) = (x;0) = \quad \text{reine Längsbeschleunigung in x-Richtung}$$

Die erfindungsgemäße, vereinfachte Variante zur Bestimmung der Mindestgeschwindigkeit, einer an sich zweidimensionalen Bewegung des Fahrzeugs, wird nunmehr durch physische Messung in nur einer Raumrichtung, also einer eindimensionalen Messung ermöglicht. Weitere Geschwindigkeitskomponenten, welche zur vollständigen Erfassung aller räumlichen Dimensionen der mehrdimensionalen Fahrbewegung notwendig wären, werden nicht physisch erfasst. Durch Berücksichtigung der nicht erfassten Geschwindigkeitskomponenten würde die mehrdimensionale Geschwindigkeit des bemessenen Fahrzeugs, nach dem Zusammenhang $|\vec{v}| = \sqrt{x^2 + y^2} = v$ , in jedem Fall erhöht. Auf dieser Grundlage erfolgt die Interpretation des derart erhaltenen Messwertes als Mindestgeschwindigkeit des Fahrzeuges.

Die momentane Geschwindigkeit einer zweidimensionalen Bewegung eines Fahrzeugs würde auf Basis des vereinfachten Verfahrens, beispielsweise mit eindimensionaler Messung in x-Richtung, durch den zweidimensionalen Geschwindigkeitsvektor $\vec{v}\,(x,y) = (x;\ 0\ )$, mit $y = 0$, mithin durch die Gleichung $|\vec{v}| = \sqrt{x^2 + y^2} = \sqrt{x^2 + 0^2} = v$, bestimmt. Siehe hierzu Fig. 2.

Die Fig. 2 zeigt beispielhaft einen zweidimensionalen Geschwindigkeitszustand eines Fahrzeugs beim Durchfahren einer Kurve, dessen Mindestgeschwindigkeit durch Messung in einer Dimension bestimmt wird. Für diese

Zustandsphase gilt: $\vec{v}$ (x,y) = (x; 0) = keine Messung der y-Komponente.

Im Vergleich zum bisherigen Stand der Technik kann eine Messung, in dieser vereinfachten Variante nach Anspruch 1, aus triangulären und fahrdynamischen Gründen ohne weitere Berücksichtigung einer Abweichung zwischen Messachse und mehrdimensionaler Fahrbewegung des Fahrzeugs, mithin ohne Beachtung eines potenziellen Winkel- oder Cosinusfehlers, auch im Bereich einer beliebigen Fahrbahnkurve oder Einmündung/ Kreuzung erfolgen. Das erfindungsgemäße Setting wirkt dem potenziellen Auftreten des Stufen- und Abgleiteffekts in dem Messbereich entgegen. Messwertabweichungen wirken sich aufgrund des verwendeten Settings ausschließlich zu Gunsten des Betroffenen aus.

Im Vergleich zum bisherigen Stand der Technik in Bezug auf das unter der Veröffentlichungsnummer JP 2013-174456A bekannte Laser-Doppler-Messsystem, kann die Messung mit variablem Messbereich auch bei einem im Voraus nicht präzise zu definierendem Messpunkt erfolgen. Der Messbereich kann erfindungsgemäß durch Anpassung der Messstrecke in der jeweiligen Raumrichtung, individuell an den Messort angepasst werden. Hier wäre eine Anwendung bei einer Geschwindigkeitsmessung innerhalb einer Fahrbahnkurve denkbar, die durch unterschiedliche Fahrzeuge mit unterschiedlicher Fahrlinie durchfahren wird.

Ein Praxistest zu dem Vektormessverfahren wurde mittels zweier Lichtschrankenmesssysteme analog RS 06181 mit Stoppuhr LED 10/92 E der Firma wk-Ingenieurbüro für Zeitmessung, unter Verwendung der Reflektionslichtschrankensensoren Panasonic CY-192B-P-Y, mit zur Fahrbahn paralleler Ausrichtung und festem Abstand von jeweils einem Meter zwischen Start und Stopp, unter Annahme einer konstanten Fahrzeuggeschwindigkeit innerhalb dieser Messstrecke, ausgeführt. Die Sensoren verfügen nach dem Datenblatt des Herstellers über eine maximale Ansprechzeit von einer Millisekunde. Die Auflösung der LED-Stoppuhr, nach Bezeichnung des Herstellers ELV LSU 100, beträgt ebenfalls eine Millisekunde. Die Anlage war vor der Messung nicht amtlich geeicht worden.
Nach einem Funktionstest, in dem beide Anlagen zunächst einzeln, hintereinander betrieben wurden, wurden beide Anlagen, unter Anwendung von Erkenntnissen trigonometrischer Zusammenhänge, orthogonal zueinander ausgerichtet und ein dem Vektormessverfahren entsprechender Aufbau errichtet.

Der so errichtete zweidimensionale Messbereich, mit einer Messstrecke von jeweils einem Meter pro Raumrichtung, wurde unter Verwendung eines serienmäßig ausgestatteten Personenkraftwagens mit zugelassener Rad-Reifen-Kombination in einer 180 Grad, kurvenförmig verlaufenden Fahrlinie mit unterschiedlichen Geschwindigkeiten durchfahren. Der Tachometer des Fahrzeugs war vor der Messung nicht amtlich geeicht worden. Die Aktivierung des Tempomaten war ab einer Geschwindigkeit von mindestens 25 km/h möglich.

Mit dem beschriebenen Messaufbau wurde nachfolgende Messreihe zweier, zueinander orthogonaler Raumrichtungen, parallel zur Fahrbahn, gleichzeitig gemessen und eine resultierenden Kurvengeschwindigkeit, die momentane Geschwindigkeit, vektoriell bestimmt.

| Geschwindigkeit gemäß Tachometer | 7,5 km/h (Standgas) | 10 km/h | 15 km/h | 25 km/h (Tempomat) |
|---|---|---|---|---|
| Mindestgeschwindigkeit gemäß EU75/443/EWG und § 57 StVZO | 2,75 km/h | 5 km/h | 9,5 km/h | 18,5 km/h |
| Zeitmessung Richtung 1 | 0,738 s | 0,583 s | 0,407 s | 0,216 s |
| Zeitmessung Richtung 2 | 0,721 s | 0,540 s | 0,415 s | 0,247 s |
| **Resultierende Kurvengeschwindigkeit** | **6,98 km/h** | **9,09 km/h** | **12,39 km/h** | **22,14 km/h** |

Die Zeitmessung in Richtung 1 oder in Richtung 2 entsprach dabei jeweils dem, auf die dort vorhandenen, örtlichen Gegebenheiten übertragenen, erfindungsgemäßen Setting des vereinfachten Vektormessverfahrens. Die gemessenen Geschwindigkeitskomponenten in jeder dieser einzelnen Raumrichtung waren dabei jeweils ausschließlich kleiner als die mehrdimensionale Geschwindigkeit des bemessenen Fahrzeugs.

**Patentansprüche**

**1.** Verfahren zur Bestimmung der Mindestgeschwindigkeit eines Fahrzeugs durch objektexterne Messung, **dadurch gekennzeichnet, dass** die Bestimmung der Mindestgeschwindigkeit des sich zweidimensional in x-Richtung und y-Richtung bewegenden Fahrzeuges, wobei die x- und y-Richtung orthogonal zueinander angeordnet sind, nach dem Prinzip der mehrdimensionalen Geschwindigkeitsmessung erfolgt, wobei die Messung nur einer Geschwindigkeitskomponente, von insgesamt zwei möglichen, mithilfe eines messenden Laser-, Radar- oder Lichtschrankenmesssystems nach dem Prinzip der Weg-Zeit-Messung erfolgt, wobei das Messsystem ferner derart ausgerichtet ist, dass sich das Fahrzeug bei der Bemessung auf seiner zweidimensionalen Fahrbahn vorwiegend in Richtung der Messachse und in Richtung des Messsystems bewegt.

2. Verfahren nach Anspruch 1, **dadurch gekennzeichnet, dass** bei dessen Ausführung die Mindestgeschwindigkeit des Fahrzeugs beim Durchfahren einer Kurve bestimmt wird.

3. Verfahren nach Anspruch 1 oder 2, **dadurch gekennzeichnet, dass** mittels des Verfahrens die Höchstgeschwindigkeit beim Durchfahren einer Kurve überwacht wird.

4. Verfahren nach Anspruch 1, **dadurch gekennzeichnet, dass** bei dessen Ausführung die Mindestgeschwindigkeit des Fahrzeugs beim Abbiegen bestimmt wird.

5. Verfahren nach Anspruch 1 oder 4, **dadurch gekennzeichnet, dass** mittels des Verfahrens die Höchstgeschwindigkeit beim Abbiegen überwacht wird.

Fig. 1

**Fig. 2**

Straße 1

Messsystem 1

2)

3)          Straße 2

1)

y

x

EP 4 528 288 A2

7

Fig. 3

Straße 1

3)

2)

1)

Messsystem 1

y

x

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3929593 A
- DE 102008019818 A1
- DE 102005028264 B4
- DE 000003913526 A1
- EP 000000042546 A1
- EP 000000397984 A2
- DE 000001239128 B
- WO 001994004930 A1
- DE 102018118150 A1
- JP 2013174456 A